# EUROPEAN PATENT SPECIFICATION

(11) **EP 2 232 662 B1**
(45) Date of publication and mention of the grant of the patent: **05.09.2018**
(21) Application number: 08870437.4
(22) Date of filing: 19.11.2008
(51) Int. Cl.: H02H 7/10, B60L 11/18, H02H 9/00, H02H 9/02

(54) **THE CIRCUIT APPARATUS FOR PROTECTING A PRE-CHARGE RESISTANCE USING AN INTER-LOCK SWITCH**
SCHALTUNG FÜR DEN SCHUTZ EINES VORLADEWIDERSTANDES ANHAND EINES VERRIEGELUNGSSCHALTERS
APPAREIL DE CIRCUIT PERMETTANT LA PROTECTION D'UNE RÉSISTANCE DE PRÉCHARGE METTANT EN UVRE UN COMMUTATEUR DE VERROUILLAGE

(30) Priority: 07.01.2008 KR 20080001551
(43) Date of publication of application: 29.09.2010
(73) Proprietor: SK Innovation Co., Ltd., Seoul 110-110 (KR)
(72) Inventor: PARK, Sang Hyun, Daejeon 302-829 (KR); JANG, Sooyeup, Daejeon 305-150 (KR); LEE, Joonghui, Daejeon 305-741 (KR)
(74) Representative: Banzer, Hans-Jörg
(86) International application number: PCT/KR2008/006812
(87) International publication number: WO 2009/088156

(56) References cited:
- KR-A- 20020 052 348
- KR-A- 20020 072 976
- KR-A- 20070 020 695
- US-A1- 2006 220 601

## Description

### [Technical Field]

The present invention relates to a circuit apparatus for protecting a pre-charge resistance using an inter-lock switch, and more particularly, to a circuit apparatus for protecting a pre-charge resistance by controlling a current flowing to a voltage transformer of an electric vehicle using an inter-lock switch and a polyswitch.

### [Background Art]

A motor vehicle includes many electric apparatuses such as lights, air conditioner and wiper that are operated by an electric current. These electric apparatuses are driven by power outputted from a battery of the motor vehicle. In general, there are relays and fuses between the electric apparatuses and the battery in order to prevent an overcurrent from flowing through the motor vehicle and the current is controlled by the relays and fuses.

However, the fuse is melted and disconnected to protect circuits when an overcurrent flows. And, the disconnection of the fuse is difficult to be detected in advance and occurs anytime and anywhere without previous warning. When the fuse is not used, a circuit device such as a resistance is damaged by the overcurrent.

Document US 2006/0220601 A1 discloses a circuit apparatus according to the preamble of claim 1. In particular, this document discloses a voltage converting circuit for electric vehicles. The voltage converting circuit includes a high voltage battery for supplying electric power to a vehicle drive motor; and an inverter, which is interposed between the high voltage battery and the vehicle drive motor and has a capacitor for converting a direct current, supplied from the high voltage battery, to an alternating current and supplying it to the vehicle drive motor. Further, the voltage converting circuit includes a voltage converter, connected to the high voltage battery in parallel with the inverter, for converting a voltage of the high voltage battery to a low voltage and for outputting the low voltage; a contactor circuit, interposed between the high voltage battery and the inverter, for performing a process of suppressing rush current relative to the inverter when supplying electric power of the high voltage battery to the vehicle drive motor; and voltage converter start-up enabling units for enabling start-up of the voltage converter when a conclusion of the suppression process performed by the contactor circuit is sensed.

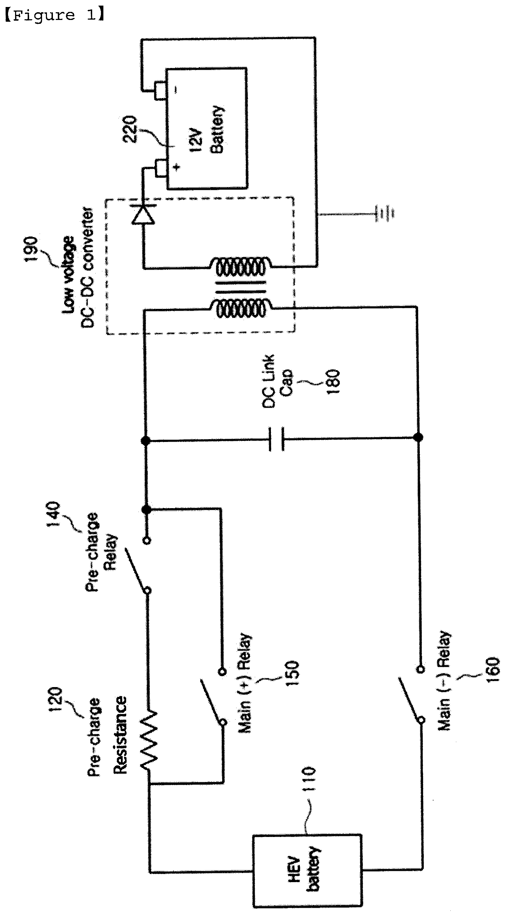

FIG. 1 shows a circuit present between a battery and a voltage transformer of a hybrid electric vehicle. In the hybrid vehicle, it is important to ensure safety of the battery 110 with high voltage (300 to 400V). The battery 110 of the hybrid vehicle has a limited volume since it should be mounted in a motor vehicle. A capacity of a pre-charge resistance 120 against a continuous current is as follows.

When considering that a current of 10A continuously flows through a resistance of 30Ω, the resistance must have the capacity resistible against P=I²R=3000W. A currently used resistance has a resistance of 30Ω and a capacity of 60W and thus can hardly resist when the current of 10A continuously flows in.

In general, a resistance having a capacity of over 1000W is difficult and high cost consumable to be manufacture and is also hard to be realized in a limited space. In a normal condition, there occurs no problem in the current system.

However, when a main (+) relay 150 is not closed for a certain period time after a pre-charge relay 140 is operated, an unallowable large continuous current flows through the pre-charge resistance 120 and the pre-charge resistance 120 may thus be damaged. The battery 110 for the hybrid vehicle includes a lithium battery, which has a risk of explosion by overheat. In other words, the damage of the pre-charge resistance may result in the risk of explosion of the battery system.

### [Disclosure]

### [Technical Problem]

An object of the present invention is to provide a circuit apparatus for protecting a pre-charge resistance by using an inter-lock switch which prevents an overcurrent from flowing to a voltage transformer.

Also, an object of the present invention is to provide a circuit apparatus for protecting a pre-charge resistance by using a polyswitch which cuts off the overcurrent flowing through the pre-charge resistance as its resistance is increased with raise in the temperature when an overcurrent flows through the pre-charge resistance.

### [Technical Solution]

The present invention provides a circuit apparatus for protecting a pre-charge resistance using an inter-lock switch, including a pre-charge resistance, a pre-charge relay and a main relay placed between a battery of a hybrid electric vehicle and a voltage transformer, wherein the circuit apparatus includes the inter-lock switch which is operated complementarily with the pre-charge relay and is for preventing continuous flow of an overcurrent to the voltage transformer and the resulting damage of the pre-charge resistance.

The inter-lock switch may be placed between a DC link capacitor and a low voltage DC-DC converter which may be included in the voltage transformer.

The circuit apparatus may further includes a polyswitch which may cut off the overcurrent flowing through the pre-charge resistance as its temperature is raised and its resistance value may be increased when the overcurrent flows continuously to the pre-charge resistance, and the polyswitch may be placed between the pre-charge resistance and the pre-charge relay or between the battery of the hybrid electric vehicle and the pre-charge resistance.

### [Advantageous Effects]

The circuit apparatus for protecting a pre-charge resistance using an inter-lock switch according to the present invention can protect efficiently the pre-charge resistance from an overcurrent by using the inter-lock switch which prevents the overcurrent from flowing to a voltage transformer.

Also, The circuit apparatus for protecting a pre-charge resistance using an inter-lock switch according to the present invention can protect efficiently the pre-charge resistance from the overcurrent by using the polyswitch which cuts off the overcurrent flowing through the pre-charge resistance as its resistance is increased with raise in the temperature, instead of using a fuse.

### [Description of Drawings]

The above and other objects, features and advantages of the present invention will become apparent from the following description of preferred embodiments given in conjunction with the accompanying drawings, in which:
Fig. 1 is a view illustrating a conventional circuit present between a battery and a voltage transformer of a hybrid electric vehicle.
Fig. 2 is a view illustrating a circuit apparatus for protecting a pre-charge resistance using an inter-lock switch according to an embodiment of the present invention.

### [Detailed Description of Main Elements]

110: battery of hybrid electric vehicle
120: pre-charge resistance
130: polyswitch
140: pre-charge relay
150: main (+) relay
160: main (-) relay
170: inter-lock switch
180: DC link capacitor
190, 210: low voltage DC-DC converter
200: motor control unit
220: battery

### [Best Mode]

Terms used herein are defined in consideration of functions in the present invention and can be changed according to the custom or intention of users or operators. Thus, definition of such terms should be determined according to overall disclosures set forth herein.

Hereinafter, the embodiments of the present invention will be described in detail with reference to accompanying drawings.

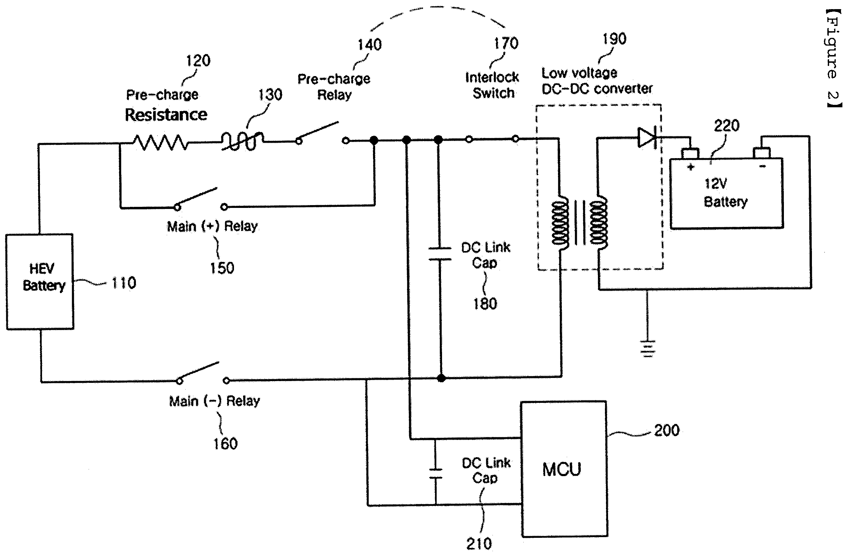

Fig. 2 is a view illustrating a circuit apparatus for protecting a pre-charge resistance using an inter-lock switch according to an embodiment of the present invention. Referring to Fig. 2, the circuit apparatus for protecting a pre-charge resistance includes a pre-charge resistance 120, a polyswitch 130, a pre-charge relay 140, a main (+) relay 150, a main (-) relay 160 and an inter-lock switch 170.

First, the pre-charge relay 140 and the main (-) relay are closed and a current flows through the pre-charge resistance, thereby charging a DC link capacitor 180 of a voltage transformer. The voltage transformer includes the DC link capacitor 180, a low voltage DC-DC converter 190 and a battery 220. Next, after the DC link capacitor 180 is charged to a certain extent, the main (+) relay is closed. Accordingly, the current does not flow through the pre-charge resistance 120 but flows only through the main (+) relay 150 and the main (-) relay 160.

In a case that a hybrid vehicle operates normally, it takes very short time to change over from the pre-charging operation to the operation of the main relays. However, when a large current flows continuously through a voltage transformer such as the low voltage DC-DC converter 190 or the DC link capacitor 180 is shorted before changed over to the operation of the main relays, the large current may flow continuously to the pre-charge resistance 120.

The circuit apparatus for protecting a pre-charge resistance prevents an overcurrent from flowing continuously using the inter-lock switch 170 placed between the DC link capacitor 180 and the low voltage DC-DC converter 190. The inter-lock switch 170 is operated complementarily with the pre-charge relay 140. That is to say, the inter-lock switch 170 is opened when the pre-charge relay 140 is closed and the inter-lock switch 170 is closed when the pre-charge relay 140 is opened. Therefore, even though a large current flows continuously through the low voltage DC-DC converter 190, the pre-charge relay 140 is opened when the inter-lock switch 170 is closed, thereby not allowing the current does to flow to the pre-charge resistance 120, and the current does not flow from the pre-charge protection circuit to the low voltage DC-DC converter 190 when the inter-lock switch 170 is closed, thereby not allowing the overcurrent to flow to the pre-charge resistance 120.

Also, the circuit apparatus for protecting a pre-charge resistance according to the present invention may protect the pre-charge resistance 120 only using the inter-lock switch 170 or may protect the pre-charge resistance 120 using the inter-lock switch 170 together with the polyswitch 130. The poly switch 130 interrupts the circuit as its resistance is sharply increased when its temperature is raised by heat. That is to say, when a certain overcurrent flows continuously through the pre-charge resistance 120 to raise the temperature of the pre-charge resistance 120, the resistance of the polyswitch 130 is sharply increased and the current does not flow through the pre-charge resistance 120 any more.

The polyswitch 130 may be placed between the pre-charge resistance 120 and the pre-charge relay 140 as shown in FIG. 2, or placed between the battery 110 of the hybrid electric vehicle and the pre-charge resistance 120. It is possible to charge the DC link capacitor 210 connected with the motor control unit 200 using the pre-charge relay 140, the main (+) relay 150 and the main (-) relay 160, but it is apart from the subject matter of the present invention and thus will not be described.

### [Industrial Applicability]

Although the present invention has been described with reference to the embodiments shown in the drawings, it should be understood that these embodiments are provided for illustrative purpose and that various equivalent modifications and alterations will be apparent to those skilled in the art without departing from the scope and spirit of this invention.

## Claims

1. A circuit apparatus for protecting a pre-charge resistance (120) using an inter-lock switch (170), comprising a pre-charge resistance (120), a pre-charge relay (140) and a main relay (150, 160) placed between a battery (110) of a hybrid electric vehicle and a voltage transformer,
**characterized in that**
the circuit apparatus further comprises the inter-lock switch (170) which is operated complementarily with the pre-charge relay (140) and is for preventing continuous flow of an overcurrent to the voltage transformer and the resulting damage of the pre-charge resistance (120).

2. The circuit apparatus for protecting a pre-charge resistance (120) using an inter-lock switch (170) as set forth in claim 1, wherein the inter-lock switch (170) is placed between a DC link capacitor (180) and a low voltage DC-DC converter (190) which are included in the voltage transformer.

3. The circuit apparatus for protecting a pre-charge resistance (120) using an inter-lock switch (170) as set forth in claim 1, further comprising:
a polyswitch (130) which cuts off the overcurrent flowing through the pre-charge resistance (120) as its temperature is raised and its resistance value is increased when the overcurrent flows continuously to the pre-charge resistance (120).

4. The circuit apparatus for protecting a pre-charge resistance (120) using an inter-lock switch (170) as set forth in claim 3, wherein the polyswitch (130) is placed between the pre-charge resistance (120) and the pre-charge relay (140) or between the battery (110) of the hybrid electric vehicle and the pre-charge resistance (120).

## Patentansprüche

1. Schaltung für den Schutz eines Vorladewiderstandes (120) anhand eines Verriegelungsschalters (170), aufweisend einen Vorladewiderstand (120), ein Vorladerelay (140) und ein Hauptrelay (150, 160), welche zwischen einer Batterie (110) eines Hybrid-Elektrofahrzeugs und einem Spannungswandler angeordnet sind,
**dadurch gekennzeichnet, dass**
die Schaltung ferner den Verriegelungsschalter (170), welcher komplementär zu dem Vorladerelay (140) betrieben wird, aufweist und zum Verhindern eines kontinuierlichen Flusses an Überstrom zu dem Spannungswandler sowie des resultierenden Schadens des Vorladewiderstandes (120) eingerichtet ist.

2. Schaltung zum Schutz eines Vorladewiderstandes (120) anhand eines Verriegelungsschalters (170) nach Anspruch 1, wobei der Verriegelungsschalter (170) zwischen einem Gleichspannungszwischenkreiskondensator (180) und einem Niederspannungs-Gleichspannungswandler (190) angeordnet ist, welche in dem Spannungswandler inkludiert sind.

3. Schaltung zum Schutz eines Vorladewiderstandes (120) anhand eines Verriegelungsschalters (170) nach Anspruch 1, ferner aufweisend:
ein Polyswitch (130), welcher den Überstrom, der durch den Vorladewiderstand (120) fließt, unterbricht, sobald seine Temperatur erhöht ist, und sein Widerstandswert erhöht wird, sobald der Überstrom kontinuierlich zum Vorladewiderstand (120) fließt.

4. Schaltung zum Schutz eines Vorladewiderstandes (120) anhand eines Verriegelungsschalters (170) nach Anspruch 3, wobei der Polyswitch (130) zwischen dem Vorladewiderstand (120) und dem Vorladerelay (140) oder zwischen der Batterie (110) des Hybrid-Elektrofahrzeugs und dem Vorladewiderstands (120) angeordnet ist.

## Revendications

1. Appareil de circuit permettant la protection d'une résistance de précharge (120) en utilisant un commutateur de verrouillage (170), comprenant une résistance de précharge (120), un relais de précharge (140) et un relais principal (150, 160) placés entre une batterie (110) d'un véhicule électrique hybride et un transformateur de tension,
**caractérisé en ce que**
l'appareil de circuit comprend en outre le commutateur de verrouillage (170) qui est actionné de manière complémentaire avec le relais de précharge (140) et est destiné à prévenir le flux continu d'une surintensité au transformateur de tension et le dommage en résultant de la résistance de précharge (120).

2. Appareil de circuit permettant la protection d'une résistance de précharge (120) en utilisant un commutateur de verrouillage (170) selon la revendication 1, dans lequel le commutateur de verrouillage (170) est placé entre un condensateur de liaison DC (180) et un convertisseur DC-DC basse tension (190) qui sont inclus dans le transformateur de tension.

3. Appareil de circuit permettant la protection d'une résistance de précharge (120) en utilisant un commutateur de verrouillage (170) selon la revendication 1, comprenant en outre :
un fusible réarmable (130) qui coupe la surintensité qui s'écoule à travers la résistance de précharge (120) quand sa température a augmenté et sa valeur de résistance est accrue quand la surintensité s'écoule continuellement vers la résistance de précharge (120).

4. Appareil de circuit permettant la protection d'une résistance de précharge (120) en utilisant un commutateur de verrouillage (170) selon la revendication 3, dans lequel le fusible réarmable (130) est placé entre la résistance de précharge (120) et le relais de précharge (140) ou entre la batterie (110) du véhicule électrique hybride et la résistance de précharge (120).
